(19) Europäisches Patentamt
European Patent Office
Office européen des brevets

(11) **EP 2 929 386 B1**

(12) **FASCICULE DE BREVET EUROPEEN**

(45) Date de publication et mention de la délivrance du brevet:
**21.02.2018 Bulletin 2018/08**

(21) Numéro de dépôt: **13802574.7**

(22) Date de dépôt: **04.12.2013**

(51) Int Cl.:
**G02B 6/44** (2006.01)

(86) Numéro de dépôt international:
**PCT/EP2013/075515**

(87) Numéro de publication internationale:
**WO 2014/086845 (12.06.2014 Gazette 2014/24)**

(54) **CABLE OPTIQUE ET PROCEDE DE FABRICATION D'UN CABLE OPTIQUE ASSOCIE**

OPTISCHES KABEL UND ZUGEHÖRIGES VERFAHREN ZUR HERSTELLUNG EINES OPTISCHEN KABELS

OPTICAL CABLE AND ASSOCIATED METHOD FOR PRODUCING AN OPTICAL CABLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.12.2012 FR 1261616**

(43) Date de publication de la demande:
**14.10.2015 Bulletin 2015/42**

(73) Titulaire: **ACOME, Société Coopérative et Participative,
Société Anonyme coopérative de production à capital variable
75014 Paris (FR)**

(72) Inventeurs:
• **LALLINEC, Patrice**
  **F-50610 Jullouville (FR)**
• **MAHERAULT, Jérôme**
  **F-50600 Milly (FR)**

(74) Mandataire: **Regimbeau
20, rue de Chazelles
75847 Paris Cedex 17 (FR)**

(56) Documents cités:
EP-A1- 1 980 887      WO-A1-2011/076279
FR-A1- 2 914 752      US-A- 5 740 295
US-A1- 2010 109 174

**Description**

DOMAINE DE L'INVENTION

L'invention concerne un câble optique et un procédé de fabrication d'un câble optique associé.

ETAT DE LA TECHNIQUE

Pour des installations dans des zones denses dans lesquelles les câbles optiques doivent être insérés dans des conduites déjà existantes, il est préférable d'utiliser des câbles optiques présentant un taux de remplissage élevé, c'est-à-dire présentant un faible diamètre et contenant un nombre élevé de modules optiques.

Dans ces câbles optiques de forte densité, les modules optiques sont disposés à l'intérieur de la gaine en étant « câblés », c'est-à-dire qu'ils sont assemblés entre eux en hélice ou en SZ (hélice à sens d'enroulement alterné). Le câblage des éléments optiques permet de répartir les contraintes d'enroulement ou de courbure (appelée aussi « pliage ») du câble optique de manière identique sur l'ensemble des éléments optiques qu'il contient. De cette manière, le câble optique est capable de supporter des courbures de faible diamètre (diamètre de courbure inférieur ou égal à 30 fois le diamètre du câble) sans dégradation des caractéristiques de transmission des éléments optiques. La norme NF EN 60794-1-2 définit une méthode permettant d'évaluer la dégradation du facteur de transmission des fibres optiques lorsque le câble est soumis à un pliage (méthode E11A).

Cependant, du fait de ce câblage, les modules optiques sont difficiles d'accès et l'extraction d'un module peut nécessiter un enlèvement total de la gaine sur une longueur au moins égale à la longueur de module à dériver.

Par ailleurs, on connait du document FR 2 810 747 un câble optique comprenant une gaine de protection entourant une cavité et une pluralité de modules optiques s'étendant en long à l'intérieur de la cavité. La disposition des modules en long (c'est-à-dire sans câblage) et le faible taux de remplissage de la cavité procurent un certain degré de liberté des modules au sein de la cavité, permettant d'une part de limiter les contraintes s'exerçant sur les modules sous l'effet d'une courbure du câble optique, et facilitant d'autre part l'extraction d'un module en vue de réaliser une dérivation.

Le document EP 1 921 478 décrit quant à lui un câble optique comprenant une gaine de protection entourant une cavité et une pluralité de micromodules s'étendant en parallèle à l'intérieur de la cavité. Le câble optique peut présenter un taux de remplissage compris entre 0,3 et 0,7, de préférence de l'ordre de 0,3 à 0,35, le taux de remplissage étant défini comme le rapport entre la somme des sections transverses de l'ensemble des éléments sur la section de la cavité. Afin de faciliter l'extraction des modules, la surface externe des modules est recouverte d'un lubrifiant formant un film.

Toutefois, compte tenu des interstices existants entre les micromodules, le taux de remplissage de 0,7 envisagé par ce document correspondrait à un encombrement complet de la cavité et entrainerait un blocage des micromodules entre eux. En réalité, la solution proposée par ce document n'est applicable que pour un taux de remplissage de la cavité n'excédant pas 0,35.

Enfin, le document FR 2 908 524 vise à fabriquer un câble de télécommunication à fibres optiques présentant un grand nombre de fibres optiques (de 600 à 1000 fibres) disposées parallèlement entre elles avec un taux de remplissage de l'ordre de 0,5, afin d'en faciliter l'extraction sur plusieurs dizaines de mètres. A cet effet, le document propose un procédé de fabrication dans lequel des fibres optiques sont insérées dans une extrudeuse de gaine avec une vitesse d'insertion supérieure à la vitesse d'extrusion de la gaine, sous l'effet de la force de gravité, permettant ainsi de créer une surlongueur des fibres dans la gaine.

RESUME DE L'INVENTION

Un but de l'invention est de proposer un câble optique contenant des éléments non-câblés pouvant être en forte densité, tout en étant peu sensible à la courbure.

Ce but est atteint dans le cadre de la présente invention grâce à un câble optique comprenant :

- une gaine comprenant une paroi délimitant une cavité interne, et
- une pluralité d'éléments longitudinaux s'étendant en parallèle dans la cavité interne,

dans lequel les éléments longitudinaux présentent un taux d'encombrement de la cavité compris entre 0,5 et 0,9, le taux d'encombrement étant défini comme le rapport entre la somme des sections transverses des éléments longitudinaux sur la section de la cavité interne, divisé par un coefficient K, le coefficient K étant défini dans le tableau 1 en fonction du nombre d'éléments longitudinaux, et

dans lequel chaque élément longitudinal est disposé dans la cavité interne en présentant un excédent de longueur par rapport à la gaine, constaté à 20°C sans contrainte d'allongement sur le câble optique, et dans lequel la dispersion des excédents de longueurs est inférieure ou égale à 0,1%, la dispersion des excédents de longueurs étant définie comme la différence entre le plus grand excédent de longueur et le plus petit excédent de longueur.

Dans le cadre de la présente invention, l'expression « en parallèle » signifie que les éléments longitudinaux ne sont pas câblés mais sont disposés en long, les uns à côté des autres, à l'intérieur de la gaine.

Du fait de la faible dispersion des excédents de longueur (inférieure ou égale à 0,1%), les éléments longitudinaux se positionnent naturellement dans les zones de courbure du câble optique de manière à obtenir une répartition homogène des contraintes sur les différents éléments, et ce, malgré un fort taux d'encombrement (pouvant aller jusqu'à 0,9).

Au-delà d'un taux d'encombrement de 0,9, un phénomène de blocage partiel des éléments longitudinaux se produit, qui empêche leur libre déplacement dans la cavité.

Le câble optique peut en outre présenter les caractéristiques suivantes :

- le taux d'encombrement de la cavité interne est compris entre 0,7 et 0,9,
- chaque élément longitudinal présente un excédent de longueur compris entre 0% et 0,5 % de la longueur de la gaine,
- les éléments longitudinaux incluent des modules optiques, chaque module optique comprenant une enveloppe en matière plastique et une ou plusieurs fibres optiques contenues dans l'enveloppe,
- les éléments longitudinaux incluent au moins 6 modules optiques,
- la paroi de la gaine est tubulaire et entoure la cavité, et la gaine comprend deux éléments porteurs noyés dans la paroi et agencés en des positions diamétralement opposées,
- les éléments porteurs sont en polymère renforcé avec des fibres ou en métal,
- les éléments longitudinaux incluent un filin hydrogonflant, un élément de renfort, une fibre optique nue, un conducteur métallique ou une combinaison de ces éléments,
- la paroi de la gaine est formée en un matériau non propagateur de la flamme à faible taux de dégagement de fumée et à quasi-absence de gaz halogénés (LSOH), tel qu'un matériau contenant du polypropylène ou du polyéthylène, en polyéthylène, en polychlorure de vinyle ou une combinaison de ces matériaux,
- la gaine comprend en outre une enveloppe de protection s'étendant entre la paroi et les éléments longitudinaux.

L'invention concerne également un procédé de fabrication d'un câble optique tel que défini précédemment, comprenant des étapes de :

- former la paroi de la gaine par extrusion d'une matière plastique chauffée autour des éléments longitudinaux,
- lors de l'extrusion, noyer des éléments porteurs dans la paroi de la gaine, tout en exerçant une tension sur les éléments porteurs pour allonger les éléments porteurs, puis
- une fois la paroi refroidie, relâcher la tension exercée sur les éléments porteurs de sorte que les éléments porteurs se rétractent, entrainant une rétraction de la gaine pour créer un excédent de longueur des éléments longitudinaux par rapport à la gaine.

De préférence, le relâchement de la tension crée un excédent de longueur des éléments longitudinaux compris entre 0% et 0,5%.

Dans un mode de mise en oeuvre du procédé, les éléments longitudinaux sont alimentés à l'aide d'une chenille donneuse ayant une vitesse d'alimentation synchronisée avec la vitesse de défilement de la gaine.

Dans un autre mode de mise en oeuvre du procédé, les éléments longitudinaux sont alimentés à l'aide d'un cabestan donneur ayant une vitesse d'alimentation synchronisée avec la vitesse de défilement de la gaine.

PRESENTATION DES DESSINS

D'autres caractéristiques et avantages ressortiront encore de la description qui suit, laquelle est purement illustrative et non limitative et doit être lue en regard des figures annexées, parmi lesquelles :

- la figure 1 représente de manière schématique, en coupe transversale, un câble optique conforme à un mode de réalisation de l'invention,
- la figure 2 représente de manière schématique l'aire de la section transverse de la cavité interne du câble de la figure 1,
- la figure 3 représente de manière schématique l'aire de la section transverse occupée par les éléments longitudinaux,
- la figure 4 représente de manière schématique, en coupe longitudinale, le câble optique de la figure 1, lorsqu'il n'est soumis à aucune contrainte,
- la figure 5 représente de manière schématique, en coupe longitudinale, le câble optique de la figure 1, lorsqu'il est soumis à une courbure,
- la figure 6 représente de manière schématique une ligne de fabrication d'un câble optique conforme à un mode de mise en oeuvre de l'invention.

DESCRIPTION DETAILLEE D'UN MODE DE REALISATION

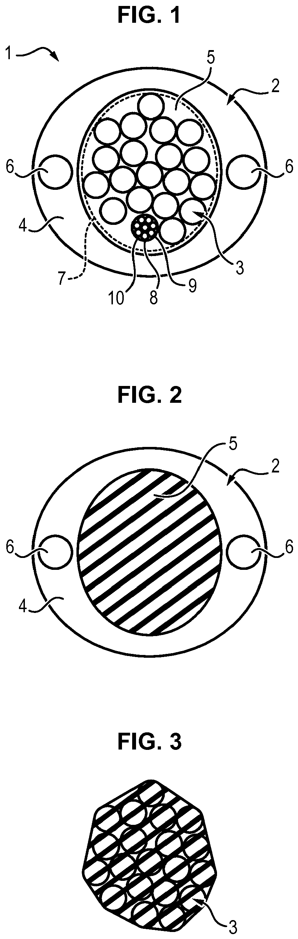

Le câble optique 1 représenté sur la figure 1 comprend une gaine 2, et une pluralité d'éléments longitudinaux 3.

La gaine 2 comprend une paroi 4 de forme générale cylindrique entourant une cavité interne longitudinale 5, et des éléments porteurs 6 noyés dans la paroi 4 et agencés en des positions diamétralement opposées.

La paroi 4 de la gaine 2 est formée en un matériau non propagateur de la flamme à faible taux de dégagement de fumée et à quasi-absence de gaz halogénés (LSOH), tel qu'un matériau contenant du polypropylène ou du polyéthylène, en polyéthylène, en polychlorure de vinyle ou une combinaison de ces matériaux.

Les éléments porteurs 6 sont en polymère renforcé avec des fibres ou en métal.

La paroi 4 de la gaine 2 peut comprendre en outre une enveloppe de protection 7 (représentée en traits pointillés) s'étendant entre la paroi et les éléments longitudinaux.

Les éléments longitudinaux 3 s'étendent en parallèle dans la cavité interne 5. Autrement dit, les éléments longitudinaux 3 ne sont pas câblés en hélice ou en SZ, mais sont disposés en long, les uns à côté des autres.

Le câble optique 1 comprend au moins 6 éléments longitudinaux 3. Les éléments longitudinaux 3 peuvent être des modules optiques 8.

Chaque module optique 8 comprend une enveloppe 9 en matière plastique et une ou plusieurs fibres optiques 10 contenues dans l'enveloppe 9.

Les éléments longitudinaux 3 peuvent également inclure un filin gonflant, un élément de renfort, une fibre optique nue, un conducteur métallique. Différents éléments longitudinaux pouvant être présents dans le câble en combinaison.

De plus, les éléments longitudinaux 3 présentent un taux d'encombrement TE de la cavité 5 compris entre 0,5 et 0,9, de préférence compris entre 0,7 et 0,9. Le taux d'encombrement TE est défini comme le rapport sF/S de la section totale occupée par les éléments et leurs interstices (sF) sur la section de la cavité interne du câble (S). Les interstices considérés sont les espaces entre les éléments longitudinaux lorsque les éléments longitudinaux sont positionnés les uns contre les autres en étant le plus rapprochés possible, sans être déformés. Le taux d'encombrement TE est estimé comme étant le rapport entre la somme des sections transverses des éléments longitudinaux (sE) sur la section de la cavité interne (S), divisé par un coefficient K.

Dans le cas d'un câble optique comprenant n modules optiques, le taux d'encombrement est :

$$TE = sF/S$$

avec $sF = sE / K$ et $sE = n \times s$

où TE est le taux d'encombrement, s est l'aire de la section d'un module optiques, S est l'aire de la section de la cavité interne, et K est un coefficient compris entre 0,5 et 0,875 qui dépend de n.

Le tableau 1 définit la valeur du coefficient K en fonction du nombre d'éléments longitudinaux dans la cavité interne du câble (les valeurs du coefficient K sont indiquées sur le site Internet www.packomania.com, à la rubrique « Circles in a circle », à la colonne « density »).

La figure 2 représente de manière schématique par des hachures l'aire de la section transverse S de la cavité interne 5 du câble optique.

La figure 3 représente de manière schématique par des hachures l'aire de la section transverse sF occupée par l'ensemble des éléments longitudinaux 3, les éléments longitudinaux étant positionnés les uns contre les autres en étant les plus rapprochés possible, sans être déformés.

Comme cela apparaît sur la figure 3, l'aire de la section transverse occupée par les éléments longitudinaux 3 est supérieure à la somme des aires des sections transverses individuelles des éléments longitudinaux 3. Le coefficient K permet de tenir compte de cette différence.

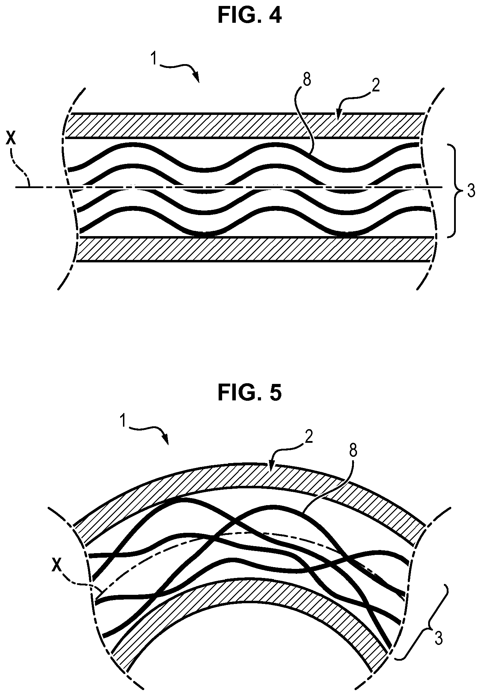

La figure 4 représente de manière schématique, en coupe longitudinale, le câble optique 1 de la figure 1, lorsqu'il n'est soumis à aucune contrainte.

Comme cela apparaît sur la figure 4, les éléments longitudinaux 3 sont disposés dans la gaine 2 en présentant un excédent de longueur par rapport à la gaine 2 (ou surlongueur). Cet excédent de longueur est de préférence compris entre 0% et 0,5 % de la longueur de la gaine 3. Du fait de cet excédent de longueur, les éléments longitudinaux 3 présentent de légères ondulations à l'intérieur de la gaine 2. Grâce à l'excédent de longueur de chacun des éléments longitudinaux 3, lorsque la gaine 2 n'est soumise à aucune contrainte, les éléments longitudinaux 3 ne sont pas en tension.

De plus, la dispersion des excédents de longueurs, c'est-à-dire la différence entre le plus petit excédent de longueur et le plus grand excédent de longueur, constatés à 20°C sans contrainte d'allongement sur le câble optique, est inférieure ou égale à 0,1%.

La figure 5 représente de manière schématique, en coupe longitudinale, le câble optique 1 de la figure 1, lorsqu'il est soumis à une courbure.

Comme cela apparaît sur la figure 5, lorsque le câble 1 est courbé, les éléments longitudinaux 3 se positionnent naturellement autour de l'axe X du câble optique 1 en passant alternativement d'un côté puis de l'autre côté de l'axe X du câble optique 1.

Ainsi, les contraintes de courbure subies par le câble optique 1 sont réparties de manière homogène sur les différents éléments longitudinaux 3. Autrement dit, les éléments longitudinaux 3 ne subissent pas d'allongement.

De plus, lorsque le câble optique 1 n'est plus courbé, les éléments longitudinaux 3 reprennent spontanément une position proche de celle qui est illustrée sur la figure 4.

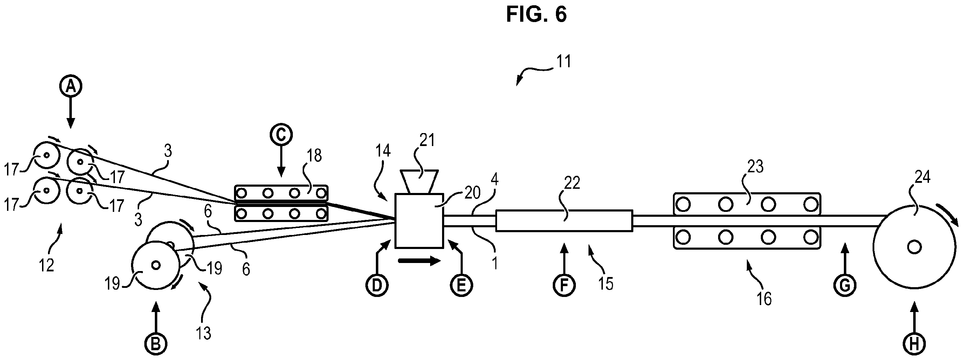

La figure 6 représente de manière schématique une ligne de fabrication 11 d'un câble optique conforme à un premier mode de mise en oeuvre de l'invention.

Comme cela est illustré sur la figure 6, la ligne de fabrication 11 comprend un poste d'alimentation en éléments longitudinaux 12, un poste d'alimentation en éléments porteurs 13, un poste de gainage 14, un poste de refroidissement 15, un poste d'entrainement 16 et un poste d'enroulement 25.

Le poste d'alimentation en éléments longitudinaux 12 comprend une pluralité de bobines d'alimentation 17 sur lesquelles sont enroulées les éléments longitudinaux 3, et une chenille donneuse 18 permettant de tirer les éléments longitudinaux 3 pour dévider les éléments longitudinaux 3 à partir des bobines 17 et délivrer les éléments longitudinaux 3 à une vitesse de délivrance contrôlée vers le poste de gainage 14.

Le poste d'alimentation en éléments porteurs 13 comprend deux bobines d'alimentation 19 sur lesquelles sont enroulés les éléments porteurs 6 et des freins (non représentés) adaptés pour s'opposer à la rotation des bobines 19. En s'opposant à la rotation des bobines 19, les freins maintiennent les éléments porteurs 6 en tension, ce qui génère un allongement des éléments porteurs 6. En contrôlant la force de freinage exercée par les freins sur les bobines 19, il est possible de contrôler de manière précise l'allongement des éléments porteurs 6 en entrée du poste de gainage 14.

Le poste de gainage 14 comprend une tête d'extrusion 20 recevant en entrée les éléments longitudinaux 3, les éléments porteurs 6 et de la matière plastique 21 destinée à former la gaine du câble optique 1.

Le poste de refroidissement 15 comprend un bac de refroidissement 22 dans lequel le câble optique 1 défile.

Le poste d'entrainement 16 comprend une chenille d'entrainement 23 permettant de tirer le câble optique 1 pour l'entrainer en défilement. La mise en mouvement de la chenille 23 provoque le défilement du câble 1 le long de la ligne de fabrication et le dévidage des éléments longitudinaux 3 et des éléments de renfort 6 à partir des bobines 17 et 19, la vitesse de défilement du câble 1 étant réglée par la vitesse d'avancement de la chenille d'entrainement 23.

Le poste d'enroulement 25 comprend une bobine 24 (ou touret) sur laquelle est enroulé le câble optique 1 en vue de son stockage.

Selon une première étape (A), les éléments longitudinaux 3 sont déroulés à partir des bobines d'alimentation 17.

Simultanément, selon une deuxième étape (B), les éléments de renfort 6 sont déroulés à partir des bobines d'alimentation 19. Sous l'action des freins, les bobines d'alimentation 19 exercent une tension sur les éléments porteurs 6, ce qui provoque l'allongement des éléments porteurs 6.

Selon une troisième étape (C), les éléments longitudinaux 3 passent dans la chenille donneuse 18. La chenille donneuse 18 a une vitesse d'alimentation synchronisée avec la vitesse d'avancement de la chenille d'entrainement 23, de sorte que les éléments longitudinaux sont amenés en entrée de la tête d'extrusion 20 avec une vitesse de défilement identique à la vitesse de défilement du câble optique 1 en sortie de la tête d'extrusion 20.

Selon une quatrième étape (D), les éléments longitudinaux 3 et les éléments porteurs 6 sont entrainés en défilement à travers la tête d'extrusion.

Simultanément, selon une cinquième étape (E), la paroi 4 de la gaine 2 est formée par extrusion de la matière plastique 21 chauffée autour des éléments longitudinaux 3, les éléments porteurs 6 étant noyés dans la paroi 4 de la gaine 2.

Selon une sixième étape (F), le câble optique 1 en cours de formation est entrainé en défilement par la chenille d'entrainement 23. Le câble optique 1 défile dans le bac de refroidissement (22), ce qui entraine une solidification de la matière plastique formant la paroi 4 de la gaine 2.

Selon une septième étape (G), une fois la paroi 4 solidifiée, la tension exercée sur les éléments porteurs 6 est relâchée de sorte que la gaine 2 revient à une longueur naturelle en créant un excédent de longueur des éléments longitudinaux 3 par rapport à la gaine 2.

Selon une huitième étape (H), le câble optique 1 est enroulé autour de la bobine 24.

Dans le mode de mise en oeuvre du procédé qui vient d'être décrit, une ou plusieurs chenille(s) donneuse(s) 18 dont la vitesse de délivrance est synchronisée avec la vitesse de la ligne de gainage est(sont) utilisée(s). La ou les chenille(s) donneuse(s) 18 délivre(nt) les éléments longitudinaux 3 exactement à la vitesse de défilement du câble optique 1 en sortie de la tête d'extrusion 20.

Dans un autre mode de mise en oeuvre, la ou les chenille(s) donneuse(s) 18 est(sont) remplacée(s) par un cabestan donneur dont la vitesse d'alimentation est synchronisée avec la vitesse de défilement du câble optique 1 en sortie de la tête d'extrusion 20.

L'utilisation d'une ou plusieurs chenille(s) donneuse(s) ou d'un ou plusieurs cabestan(s) donneur(s) permet de régler précisément la vitesse d'alimentation des éléments longitudinaux 3 en entrée de la tête d'extrusion et par conséquent d'obtenir dans le câble optique final un excédent de longueur sensiblement identique de tous les éléments longitudinaux 3, c'est-à-dire que la dispersion des excédents de longueur des éléments longitudinaux est inférieure ou égale à 0,1%.

L'excédent de longueur des éléments longitudinaux 3 est déterminé par l'allongement apporté aux éléments porteurs 6 noyés dans la paroi 4 de la gaine 2. Le relâchement de la tension exercée sur les éléments porteurs 6 libère l'excédent de longueur désiré des éléments longitudinaux 3. Ainsi, un allongement de 0,2% sur chaque élément porteur 6 génère un excédent de longueur de 0,2% de chacun des éléments longitudinaux 3 dans le câble optique final.

L'allongement d'un élément porteur 6 est obtenu en appliquant un effort de traction sur l'élément porteur 6, l'effort de traction étant calculé en fonction du module d'élasticité et de la section de l'élément porteur 3 :

$$F = E \times Sp \times l$$

où F est l'effort de traction, E est le module d'élasticité de l'élément porteur, Sp est la section transversale de l'élément porteur et l est l'allongement de l'élément porteur souhaité.

**EXEMPLE 1** : Réalisation d'un câble optique unitube comprenant 94 fibres optiques réparties en 47 micro-câbles poussables à deux fibres (MCP2)

Selon un premier exemple de réalisation, le câble optique comprend :

- une gaine comprenant une paroi en matériau non propagateur de la flamme à faible taux de dégagement de fumée et à quasi-absence de gaz halogénés (LSOH), et deux éléments porteurs en polymère renforcé avec des fibres (FRP), chaque élément porteur présentant un diamètre de 1,05 millimètres, et
- 47 modules optiques sous la forme de micro-câbles poussables présentant un diamètre externe de 1,2 millimètres, chaque module optique comprenant une enveloppe renfermant 2 fibres optiques.

Le câble optique ne comprend pas d'autre élément longitudinal.

La paroi de la gaine présente une forme tubulaire. La surface externe de la paroi présente une forme cylindrique de révolution ayant un diamètre externe de 14 millimètres.

La section de la cavité interne est de 75 millimètres carré.

L'excédent de longueur des modules optiques, mesuré à 20°C sans contrainte d'allongement sur le câble optique, est de 0,05% avec une dispersion de 0,06%.

Le câble optique obtenu présente un taux d'encombrement des fibres dans la cavité de 0,9.

La mesure de contrainte au pliage est effectuée selon l'essai normalisé E11A défini par la norme NF EN 60794-1-2.

Pour un diamètre de mandrin de 240 millimètres, la dégradation du facteur de transmission des fibres optiques mesurée à un longueur d'onde de 1550 nanomètres est inférieure à 0,01 décibels, ce qui signifie qu'il n'y a pas de dégradation.

**EXEMPLE 2** : Réalisation d'un câble optique unitube comprenant 192 fibres optiques réparties en 48 compact tubes à 4 fibres (CT4)

Selon un deuxième exemple de réalisation, le câble optique comprend :

- une gaine comprenant une paroi en matériau non propagateur de la flamme à faible taux de dégagement de fumée et à quasi-absence de gaz halogénés (LSOH), et deux éléments porteurs en polymère renforcé avec des fibres (FRP), chaque élément porteur présentant un diamètre de 1,05 millimètres, et
- 48 modules optiques sous la forme de compact tubes à 4 fibres présentant un diamètre externe de 0,85 millimètres, chaque module optique comprenant une enveloppe renfermant 4 fibres optiques.

Le câble optique ne comprend pas d'autre élément longitudinal.

La paroi de la gaine présente une forme tubulaire. La surface externe de la paroi présente une forme cylindrique de révolution ayant un diamètre externe de 12 millimètres.

La section de la cavité interne est de 49,3 millimètres carré.

L'excédent de longueur des modules optiques, mesuré à 20°C sans contrainte d'allongement sur le câble optique, est de 0,13% avec une dispersion de 0,04%.

Le câble optique obtenu présente un taux d'encombrement des fibres dans la cavité de 0,7.

La mesure de contrainte au pliage est effectuée selon l'essai normalisé E11A défini par la norme NF EN 60794-1-2.

Pour un diamètre de mandrin de 200 millimètres, la dégradation du facteur de transmission des fibres optiques mesurée à un longueur d'onde de 1550 nanomètres est inférieure à 0,01 décibel, ce qui signifie qu'il n'y a pas de dégradation.

**Tableau 1**

**Densité de l'empilement en fonction du nombre d'élément**

| Nombre d'éléments | K | Nombre d'éléments | K | Nombre d'éléments | K | Nombre d'éléments | K | Nombre d'éléments | K |
|---|---|---|---|---|---|---|---|---|---|
| >1500 | 0,875 | 101 | 0,813 | 201 | 0,834 | 301 | 0,848 | 401 | 0,850 |
| 2 | 0,500 | 102 | 0,814 | 202 | 0,833 | 302 | 0,846 | 402 | 0,851 |
| 3 | 0,646 | 103 | 0,812 | 203 | 0,833 | 303 | 0,845 | 403 | 0,850 |
| 4 | 0,686 | 104 | 0,812 | 204 | 0,833 | 304 | 0,844 | 404 | 0,850 |
| 5 | 0,685 | 105 | 0,813 | 205 | 0,831 | 305 | 0,844 | 405 | 0,850 |
| 6 | 0,667 | 106 | 0,813 | 206 | 0,832 | 306 | 0,845 | 406 | 0,851 |
| 7 | 0,778 | 107 | 0,813 | 207 | 0,832 | 307 | 0,845 | 407 | 0,852 |
| 8 | 0,733 | 108 | 0,813 | 208 | 0,832 | 308 | 0,842 | 408 | 0,853 |
| 9 | 0,689 | 109 | 0,815 | 209 | 0,833 | 309 | 0,843 | 409 | 0,854 |
| 10 | 0,688 | 110 | 0,815 | 210 | 0,833 | 310 | 0,842 | 410 | 0,853 |
| 11 | 0,714 | 111 | 0,816 | 211 | 0,834 | 311 | 0,843 | 411 | 0,854 |
| 12 | 0,739 | 112 | 0,817 | 212 | 0,835 | 312 | 0,843 | 412 | 0,854 |
| 13 | 0,724 | 113 | 0,819 | 213 | 0,835 | 313 | 0,844 | 413 | 0,854 |
| 14 | 0,747 | 114 | 0,819 | 214 | 0,834 | 314 | 0,844 | 414 | 0,855 |
| 15 | 0,734 | 115 | 0,820 | 215 | 0,835 | 315 | 0,845 | 415 | 0,855 |
| 16 | 0,751 | 116 | 0,820 | 216 | 0,835 | 316 | 0,845 | 416 | 0,855 |
| 17 | 0,740 | 117 | 0,820 | 217 | 0,835 | 317 | 0,844 | 417 | 0,855 |
| 18 | 0,761 | 118 | 0,821 | 218 | 0,836 | 318 | 0,844 | 418 | 0,856 |
| 19 | 0,803 | 119 | 0,821 | 219 | 0,838 | 319 | 0,845 | 419 | 0,856 |
| 20 | 0,762 | 120 | 0,822 | 220 | 0,836 | 320 | 0,845 | 420 | 0,857 |
| 21 | 0,761 | 121 | 0,823 | 221 | 0,836 | 321 | 0,845 | 421 | 0,859 |
| 22 | 0,743 | 122 | 0,819 | 222 | 0,836 | 322 | 0,844 | 422 | 0,855 |
| 23 | 0,748 | 123 | 0,816 | 223 | 0,835 | 323 | 0,845 | 423 | 0,854 |
| 24 | 0,751 | 124 | 0,817 | 224 | 0,836 | 324 | 0,845 | 424 | 0,853 |

| Densité de l'empilement en fonction du nombre d'élément | | | | | | | | | |
|---|---|---|---|---|---|---|---|---|---|
| Nombre d'éléments | K | Nombre d'éléments | K | Nombre d'éléments | K | Nombre d'éléments | K | Nombre d'éléments | K |
| 25 | 0,755 | 125 | 0,817 | 225 | 0,836 | 325 | 0,846 | 425 | 0,854 |
| 26 | 0,765 | 126 | 0,817 | 226 | 0,835 | 326 | 0,846 | 426 | 0,853 |
| 27 | 0,774 | 127 | 0,818 | 227 | 0,834 | 327 | 0,847 | 427 | 0,853 |
| 28 | 0,774 | 128 | 0,819 | 228 | 0,835 | 328 | 0,847 | 428 | 0,853 |
| 29 | 0,770 | 129 | 0,819 | 229 | 0,834 | 329 | 0,847 | 429 | 0,853 |
| 30 | 0,781 | 130 | 0,819 | 230 | 0,835 | 330 | 0,847 | 430 | 0,853 |
| 31 | 0,783 | 131 | 0,819 | 231 | 0,834 | 331 | 0,848 | 431 | 0,852 |
| 32 | 0,774 | 132 | 0,820 | 232 | 0,835 | 332 | 0,847 | 432 | 0,852 |
| 33 | 0,784 | 133 | 0,820 | 233 | 0,836 | 333 | 0,847 | 433 | 0,852 |
| 34 | 0,778 | 134 | 0,822 | 234 | 0,838 | 334 | 0,847 | 434 | 0,851 |
| 35 | 0,780 | 135 | 0,822 | 235 | 0,841 | 335 | 0,847 | 435 | 0,851 |
| 36 | 0,791 | 136 | 0,822 | 236 | 0,839 | 336 | 0,847 | 436 | 0,852 |
| 37 | 0,810 | 137 | 0,821 | 237 | 0,839 | 337 | 0,847 | 437 | 0,851 |
| 38 | 0,784 | 138 | 0,821 | 238 | 0,841 | 338 | 0,846 | 438 | 0,852 |
| 39 | 0,783 | 139 | 0,821 | 239 | 0,840 | 339 | 0,845 | 439 | 0,852 |
| 40 | 0,788 | 140 | 0,821 | 240 | 0,841 | 340 | 0,845 | 440 | 0,852 |
| 41 | 0,778 | 141 | 0,821 | 241 | 0,842 | 341 | 0,845 | 441 | 0,852 |
| 42 | 0,778 | 142 | 0,822 | 242 | 0,841 | 342 | 0,846 | 442 | 0,852 |
| 43 | 0,781 | 143 | 0,821 | 243 | 0,840 | 343 | 0,848 | 443 | 0,853 |
| 44 | 0,783 | 144 | 0,820 | 244 | 0,840 | 344 | 0,846 | 444 | 0,853 |
| 45 | 0,785 | 145 | 0,823 | 245 | 0,840 | 345 | 0,848 | 445 | 0,853 |
| 46 | 0,786 | 146 | 0,822 | 246 | 0,840 | 346 | 0,848 | 446 | 0,853 |
| 47 | 0,788 | 147 | 0,824 | 247 | 0,841 | 347 | 0,849 | 447 | 0,853 |
| 48 | 0,791 | 148 | 0,826 | 248 | 0,840 | 348 | 0,850 | 448 | 0,853 |

| Densité de l'empilement en fonction du nombre d'élément | | | | | | | | | |
|---|---|---|---|---|---|---|---|---|---|
| Nombre d'éléments | K | Nombre d'éléments | K | Nombre d'éléments | K | Nombre d'éléments | K | Nombre d'éléments | K |
| 49 | 0,788 | 149 | 0,825 | 249 | 0,840 | 349 | 0,852 | 449 | 0,854 |
| 50 | 0,792 | 150 | 0,828 | 250 | 0,839 | 350 | 0,849 | 450 | 0,854 |
| 51 | 0,791 | 151 | 0,831 | 251 | 0,838 | 351 | 0,849 | 451 | 0,855 |
| 52 | 0,796 | 152 | 0,830 | 252 | 0,839 | 352 | 0,849 | 452 | 0,855 |
| 53 | 0,792 | 153 | 0,828 | 253 | 0,841 | 353 | 0,849 | 453 | 0,856 |
| 54 | 0,802 | 154 | 0,828 | 254 | 0,839 | 354 | 0,849 | 454 | 0,854 |
| 55 | 0,816 | 155 | 0,829 | 255 | 0,837 | 355 | 0,850 | 455 | 0,855 |
| 56 | 0,797 | 156 | 0,829 | 256 | 0,836 | 356 | 0,849 | 456 | 0,854 |
| 57 | 0,799 | 157 | 0,828 | 257 | 0,837 | 357 | 0,849 | 457 | 0,854 |
| 58 | 0,798 | 158 | 0,827 | 258 | 0,838 | 358 | 0,849 | 458 | 0,855 |
| 59 | 0,799 | 159 | 0,827 | 259 | 0,838 | 359 | 0,849 | 459 | 0,855 |
| 60 | 0,803 | 160 | 0,826 | 260 | 0,839 | 360 | 0,850 | 460 | 0,854 |
| 61 | 0,813 | 161 | 0,825 | 261 | 0,839 | 361 | 0,851 | 461 | 0,853 |
| 62 | 0,795 | 162 | 0,825 | 262 | 0,840 | 362 | 0,849 | 462 | 0,853 |
| 63 | 0,797 | 163 | 0,823 | 263 | 0,840 | 363 | 0,850 | 463 | 0,853 |
| 64 | 0,797 | 164 | 0,824 | 264 | 0,843 | 364 | 0,850 | 464 | 0,853 |
| 65 | 0,799 | 165 | 0,825 | 265 | 0,842 | 365 | 0,850 | 465 | 0,853 |
| 66 | 0,798 | 166 | 0,825 | 266 | 0,842 | 366 | 0,850 | 466 | 0,853 |
| 67 | 0,797 | 167 | 0,826 | 267 | 0,843 | 367 | 0,849 | 467 | 0,854 |
| 68 | 0,798 | 168 | 0,826 | 268 | 0,843 | 368 | 0,848 | 468 | 0,853 |
| 69 | 0,803 | 169 | 0,827 | 269 | 0,843 | 369 | 0,847 | 469 | 0,853 |
| 70 | 0,801 | 170 | 0,828 | 270 | 0,844 | 370 | 0,847 | 470 | 0,853 |
| 71 | 0,801 | 171 | 0,828 | 271 | 0,843 | 371 | 0,847 | 471 | 0,853 |
| 72 | 0,802 | 172 | 0,828 | 272 | 0,843 | 372 | 0,848 | 472 | 0,854 |

EP 2 929 386 B1

(suite)

**Densité de l'empilement en fonction du nombre d'élément**

| Nombre d'éléments | K | Nombre d'éléments | K | Nombre d'éléments | K | Nombre d'éléments | K | Nombre d'éléments | K |
|---|---|---|---|---|---|---|---|---|---|
| 73 | 0,802 | 173 | 0,828 | 273 | 0,843 | 373 | 0,848 | 473 | 0,853 |
| 74 | 0,805 | 174 | 0,828 | 274 | 0,842 | 374 | 0,848 | 474 | 0,854 |
| 75 | 0,802 | 175 | 0,828 | 275 | 0,843 | 375 | 0,848 | 475 | 0,855 |
| 76 | 0,803 | 176 | 0,829 | 276 | 0,842 | 376 | 0,849 | 476 | 0,855 |
| 77 | 0,802 | 177 | 0,828 | 277 | 0,842 | 377 | 0,849 | 477 | 0,856 |
| 78 | 0,803 | 178 | 0,828 | 278 | 0,840 | 378 | 0,850 | 478 | 0,857 |
| 79 | 0,805 | 179 | 0,828 | 279 | 0,840 | 379 | 0,850 | 479 | 0,858 |
| 80 | 0,805 | 180 | 0,828 | 280 | 0,841 | 380 | 0,850 | 480 | 0,859 |
| 81 | 0,808 | 181 | 0,828 | 281 | 0,841 | 381 | 0,850 | 481 | 0,860 |
| 82 | 0,812 | 182 | 0,829 | 282 | 0,841 | 382 | 0,851 | 482 | 0,858 |
| 83 | 0,811 | 183 | 0,828 | 283 | 0,841 | 383 | 0,850 | 483 | 0,858 |
| 84 | 0,815 | 184 | 0,828 | 284 | 0,843 | 384 | 0,850 | 484 | 0,859 |
| 85 | 0,823 | 185 | 0,829 | 285 | 0,840 | 385 | 0,849 | 485 | 0,859 |
| 86 | 0,811 | 186 | 0,831 | 286 | 0,842 | 386 | 0,849 | 486 | 0,859 |
| 87 | 0,810 | 187 | 0,832 | 287 | 0,841 | 387 | 0,849 | 487 | 0,859 |
| 88 | 0,809 | 188 | 0,832 | 288 | 0,842 | 388 | 0,850 | 488 | 0,859 |
| 89 | 0,807 | 189 | 0,832 | 289 | 0,843 | 389 | 0,849 | 489 | 0,860 |
| 90 | 0,809 | 190 | 0,833 | 290 | 0,843 | 390 | 0,849 | 490 | 0,860 |
| 91 | 0,815 | 191 | 0,833 | 291 | 0,844 | 391 | 0,849 | 491 | 0,860 |
| 92 | 0,806 | 192 | 0,834 | 292 | 0,844 | 392 | 0,850 | 492 | 0,860 |
| 93 | 0,807 | 193 | 0,835 | 293 | 0,845 | 393 | 0,850 | 493 | 0,860 |
| 94 | 0,809 | 194 | 0,834 | 294 | 0,846 | 394 | 0,850 | 494 | 0,860 |
| 95 | 0,808 | 195 | 0,834 | 295 | 0,848 | 395 | 0,850 | 495 | 0,860 |
| 96 | 0,811 | 196 | 0,835 | 296 | 0,846 | 396 | 0,850 | 496 | 0,860 |

(suite)

| Densité de l'empilement en fonction du nombre d'élément | | | | | | | | | |
|---|---|---|---|---|---|---|---|---|---|
| Nombre d'éléments | K | Nombre d'éléments | K | Nombre d'éléments | K | Nombre d'éléments | K | Nombre d'éléments | K |
| 97 | 0,811 | 197 | 0,834 | 297 | 0,847 | 397 | 0,849 | 497 | 0,859 |
| 98 | 0,813 | 198 | 0,836 | 298 | 0,847 | 398 | 0,850 | 498 | 0,860 |
| 99 | 0,813 | 199 | 0,839 | 299 | 0,847 | 399 | 0,850 | 499 | 0,862 |
| 100 | 0,814 | 200 | 0,836 | 300 | 0,848 | 400 | 0,850 | 500 | 0,859 |
| 501 | 0,857 | 601 | 0,859 | 701 | 0,862 | 801 | 0,864 | 901 | 0,867 |
| 502 | 0,856 | 602 | 0,859 | 702 | 0,862 | 802 | 0,864 | 902 | 0,867 |
| 503 | 0,856 | 603 | 0,859 | 703 | 0,861 | 803 | 0,864 | 903 | 0,867 |
| 504 | 0,856 | 604 | 0,859 | 704 | 0,862 | 804 | 0,864 | 904 | 0,867 |
| 505 | 0,856 | 605 | 0,859 | 705 | 0,861 | 805 | 0,865 | 905 | 0,867 |
| 506 | 0,855 | 606 | 0,859 | 706 | 0,861 | 806 | 0,864 | 906 | 0,868 |
| 507 | 0,855 | 607 | 0,859 | 707 | 0,861 | 807 | 0,865 | 907 | 0,868 |
| 508 | 0,855 | 608 | 0,859 | 708 | 0,861 | 808 | 0,865 | 908 | 0,868 |
| 509 | 0,854 | 609 | 0,859 | 709 | 0,861 | 809 | 0,865 | 909 | 0,868 |
| 510 | 0,854 | 610 | 0,860 | 710 | 0,861 | 810 | 0,865 | 910 | 0,869 |
| 511 | 0,855 | 611 | 0,860 | 711 | 0,861 | 811 | 0,866 | 911 | 0,869 |
| 512 | 0,855 | 612 | 0,860 | 712 | 0,861 | 812 | 0,865 | 912 | 0,870 |
| 513 | 0,855 | 613 | 0,860 | 713 | 0,862 | 813 | 0,866 | 913 | 0,871 |
| 514 | 0,855 | 614 | 0,860 | 714 | 0,862 | 814 | 0,866 | 914 | 0,867 |
| 515 | 0,856 | 615 | 0,860 | 715 | 0,863 | 815 | 0,866 | 915 | 0,867 |
| 516 | 0,856 | 616 | 0,860 | 716 | 0,863 | 816 | 0,866 | 916 | 0,867 |
| 517 | 0,856 | 617 | 0,860 | 717 | 0,863 | 817 | 0,866 | 917 | 0,868 |
| 518 | 0,856 | 618 | 0,860 | 718 | 0,864 | 818 | 0,866 | 918 | 0,868 |
| 519 | 0,856 | 619 | 0,860 | 719 | 0,864 | 819 | 0,867 | 919 | 0,868 |
| 520 | 0,855 | 620 | 0,859 | 720 | 0,864 | 820 | 0,866 | 920 | 0,868 |

| Densité de l'empilement en fonction du nombre d'élément | | | | | | | | | |
|---|---|---|---|---|---|---|---|---|---|
| Nombre d'éléments | K | Nombre d'éléments | K | Nombre d'éléments | K | Nombre d'éléments | K | Nombre d'éléments | K |
| 521 | 0,855 | 621 | 0,859 | 721 | 0,865 | 821 | 0,866 | 921 | 0,868 |
| 522 | 0,855 | 622 | 0,859 | 722 | 0,864 | 822 | 0,867 | 922 | 0,869 |
| 523 | 0,856 | 623 | 0,859 | 723 | 0,865 | 823 | 0,868 | 923 | 0,868 |
| 524 | 0,856 | 624 | 0,859 | 724 | 0,865 | 824 | 0,867 | 924 | 0,868 |
| 525 | 0,857 | 625 | 0,859 | 725 | 0,865 | 825 | 0,867 | 925 | 0,868 |
| 526 | 0,858 | 626 | 0,859 | 726 | 0,865 | 826 | 0,867 | 926 | 0,868 |
| 527 | 0,858 | 627 | 0,860 | 727 | 0,865 | 827 | 0,867 | 927 | 0,869 |
| 528 | 0,859 | 628 | 0,861 | 728 | 0,865 | 828 | 0,867 | 928 | 0,869 |
| 529 | 0,858 | 629 | 0,861 | 729 | 0,865 | 829 | 0,867 | 929 | 0,869 |
| 530 | 0,858 | 630 | 0,862 | 730 | 0,866 | 830 | 0,867 | 930 | 0,870 |
| 531 | 0,858 | 631 | 0,863 | 731 | 0,866 | 831 | 0,867 | 931 | 0,870 |
| 532 | 0,858 | 632 | 0,862 | 732 | 0,865 | 832 | 0,867 | 932 | 0,869 |
| 533 | 0,858 | 633 | 0,862 | 733 | 0,865 | 833 | 0,867 | 933 | 0,869 |
| 534 | 0,858 | 634 | 0,863 | 734 | 0,865 | 834 | 0,867 | 934 | 0,869 |
| 535 | 0,858 | 635 | 0,862 | 735 | 0,866 | 835 | 0,867 | 935 | 0,869 |
| 536 | 0,858 | 636 | 0,863 | 736 | 0,865 | 836 | 0,867 | 936 | 0,868 |
| 537 | 0,858 | 637 | 0,864 | 737 | 0,865 | 837 | 0,867 | 937 | 0,868 |
| 538 | 0,858 | 638 | 0,862 | 738 | 0,865 | 838 | 0,867 | 938 | 0,868 |
| 539 | 0,858 | 639 | 0,863 | 739 | 0,865 | 839 | 0,867 | 939 | 0,868 |
| 540 | 0,858 | 640 | 0,862 | 740 | 0,865 | 840 | 0,867 | 940 | 0,868 |
| 541 | 0,858 | 641 | 0,862 | 741 | 0,865 | 841 | 0,867 | 941 | 0,867 |
| 542 | 0,857 | 642 | 0,862 | 742 | 0,865 | 842 | 0,867 | 942 | 0,867 |
| 543 | 0,858 | 643 | 0,862 | 743 | 0,866 | 843 | 0,867 | 943 | 0,867 |
| 544 | 0,857 | 644 | 0,862 | 744 | 0,866 | 844 | 0,867 | 944 | 0,866 |

(suite)

| Densité de l'empilement en fonction du nombre d'élément | | | | | | | | | |
|---|---|---|---|---|---|---|---|---|---|
| Nombre d'éléments | K | Nombre d'éléments | K | Nombre d'éléments | K | Nombre d'éléments | K | Nombre d'éléments | K |
| 545 | 0,856 | 645 | 0,862 | 745 | 0,867 | 845 | 0,868 | 945 | 0,866 |
| 546 | 0,857 | 646 | 0,862 | 746 | 0,865 | 846 | 0,868 | 946 | 0,866 |
| 547 | 0,858 | 647 | 0,863 | 747 | 0,864 | 847 | 0,869 | 947 | 0,865 |
| 548 | 0,856 | 648 | 0,863 | 748 | 0,864 | 848 | 0,865 | 948 | 0,866 |
| 549 | 0,856 | 649 | 0,864 | 749 | 0,863 | 849 | 0,865 | 949 | 0,866 |
| 550 | 0,857 | 650 | 0,863 | 750 | 0,863 | 850 | 0,865 | 950 | 0,866 |
| 551 | 0,856 | 651 | 0,863 | 751 | 0,863 | 851 | 0,865 | 951 | 0,866 |
| 552 | 0,857 | 652 | 0,862 | 752 | 0,863 | 852 | 0,865 | 952 | 0,866 |
| 553 | 0,858 | 653 | 0,862 | 753 | 0,863 | 853 | 0,865 | 953 | 0,866 |
| 554 | 0,858 | 654 | 0,862 | 754 | 0,863 | 854 | 0,865 | 954 | 0,866 |
| 555 | 0,859 | 655 | 0,862 | 755 | 0,863 | 855 | 0,865 | 955 | 0,867 |
| 556 | 0,859 | 656 | 0,863 | 756 | 0,863 | 856 | 0,866 | 956 | 0,867 |
| 557 | 0,859 | 657 | 0,862 | 757 | 0,863 | 857 | 0,866 | 957 | 0,867 |
| 558 | 0,859 | 658 | 0,862 | 758 | 0,863 | 858 | 0,866 | 958 | 0,867 |
| 559 | 0,860 | 659 | 0,862 | 759 | 0,864 | 859 | 0,866 | 959 | 0,867 |
| 560 | 0,860 | 660 | 0,862 | 760 | 0,864 | 860 | 0,866 | 960 | 0,867 |
| 561 | 0,861 | 661 | 0,862 | 761 | 0,864 | 861 | 0,866 | 961 | 0,867 |
| 562 | 0,861 | 662 | 0,861 | 762 | 0,864 | 862 | 0,866 | 962 | 0,867 |
| 563 | 0,861 | 663 | 0,861 | 763 | 0,864 | 863 | 0,866 | 963 | 0,867 |
| 564 | 0,862 | 664 | 0,861 | 764 | 0,864 | 864 | 0,866 | 964 | 0,867 |
| 565 | 0,864 | 665 | 0,861 | 765 | 0,864 | 865 | 0,866 | 965 | 0,867 |
| 566 | 0,862 | 666 | 0,860 | 766 | 0,864 | 866 | 0,866 | 966 | 0,867 |
| 567 | 0,862 | 667 | 0,859 | 767 | 0,864 | 867 | 0,866 | 967 | 0,867 |
| 568 | 0,862 | 668 | 0,860 | 768 | 0,864 | 868 | 0,866 | 968 | 0,867 |

| Densité de l'empilement en fonction du nombre d'élément | | | | | | | | | |
|---|---|---|---|---|---|---|---|---|---|
| Nombre d'éléments | K | Nombre d'éléments | K | Nombre d'éléments | K | Nombre d'éléments | K | Nombre d'éléments | K |
| 569 | 0,861 | 669 | 0,860 | 769 | 0,864 | 869 | 0,866 | 969 | 0,867 |
| 570 | 0,861 | 670 | 0,860 | 770 | 0,864 | 870 | 0,867 | 970 | 0,868 |
| 571 | 0,862 | 671 | 0,861 | 771 | 0,865 | 871 | 0,867 | 971 | 0,868 |
| 572 | 0,861 | 672 | 0,861 | 772 | 0,865 | 872 | 0,867 | 972 | 0,868 |
| 573 | 0,861 | 673 | 0,861 | 773 | 0,865 | 873 | 0,867 | 973 | 0,868 |
| 574 | 0,862 | 674 | 0,861 | 774 | 0,865 | 874 | 0,867 | 974 | 0,868 |
| 575 | 0,862 | 675 | 0,861 | 775 | 0,865 | 875 | 0,867 | 975 | 0,869 |
| 576 | 0,860 | 676 | 0,862 | 776 | 0,865 | 876 | 0,867 | 976 | 0,868 |
| 577 | 0,860 | 677 | 0,862 | 777 | 0,865 | 877 | 0,867 | 977 | 0,869 |
| 578 | 0,860 | 678 | 0,861 | 778 | 0,865 | 878 | 0,867 | 978 | 0,869 |
| 579 | 0,861 | 679 | 0,861 | 779 | 0,865 | 879 | 0,867 | 979 | 0,869 |
| 580 | 0,860 | 680 | 0,861 | 780 | 0,866 | 880 | 0,867 | 980 | 0,868 |
| 581 | 0,860 | 681 | 0,862 | 781 | 0,866 | 881 | 0,867 | 981 | 0,868 |
| 582 | 0,860 | 682 | 0,861 | 782 | 0,866 | 882 | 0,867 | 982 | 0,868 |
| 583 | 0,861 | 683 | 0,862 | 783 | 0,867 | 883 | 0,867 | 983 | 0,868 |
| 584 | 0,858 | 684 | 0,863 | 784 | 0,866 | 884 | 0,867 | 984 | 0,868 |
| 585 | 0,859 | 685 | 0,863 | 785 | 0,866 | 885 | 0,867 | 985 | 0,868 |
| 586 | 0,857 | 686 | 0,863 | 786 | 0,866 | 886 | 0,867 | 986 | 0,868 |
| 587 | 0,857 | 687 | 0,864 | 787 | 0,866 | 887 | 0,867 | 987 | 0,868 |
| 588 | 0,858 | 688 | 0,864 | 788 | 0,866 | 888 | 0,867 | 988 | 0,868 |
| 589 | 0,858 | 689 | 0,864 | 789 | 0,866 | 889 | 0,867 | 989 | 0,867 |
| 590 | 0,859 | 690 | 0,865 | 790 | 0,865 | 890 | 0,867 | 990 | 0,867 |
| 591 | 0,859 | 691 | 0,863 | 791 | 0,865 | 891 | 0,866 | 991 | 0,867 |
| 592 | 0,859 | 692 | 0,863 | 792 | 0,865 | 892 | 0,866 | 992 | 0,868 |

| Densité de l'empilement en fonction du nombre d'élément | | | | | | | | | |
|---|---|---|---|---|---|---|---|---|---|
| Nombre d'éléments | K | Nombre d'éléments | K | Nombre d'éléments | K | Nombre d'éléments | K | Nombre d'éléments | K |
| 593 | 0,859 | 693 | 0,863 | 793 | 0,865 | 893 | 0,866 | 993 | 0,867 |
| 594 | 0,859 | 694 | 0,863 | 794 | 0,865 | 894 | 0,866 | 994 | 0,867 |
| 595 | 0,859 | 695 | 0,863 | 795 | 0,864 | 895 | 0,866 | 995 | 0,867 |
| 596 | 0,860 | 696 | 0,863 | 796 | 0,864 | 896 | 0,866 | 996 | 0,867 |
| 597 | 0,860 | 697 | 0,863 | 797 | 0,864 | 897 | 0,866 | 997 | 0,866 |
| 598 | 0,859 | 698 | 0,862 | 798 | 0,864 | 898 | 0,866 | 998 | 0,867 |
| 599 | 0,859 | 699 | 0,862 | 799 | 0,864 | 899 | 0,866 | 999 | 0,867 |
| 600 | 0,859 | 700 | 0,862 | 800 | 0,864 | 900 | 0,866 | 1000 | 0,867 |
| 1001 | 0,867 | 1101 | 0,867 | 1201 | 0,871 | 1301 | 0,871 | 1401 | 0,872 |
| 1002 | 0,868 | 1102 | 0,867 | 1202 | 0,871 | 1302 | 0,871 | 1402 | 0,872 |
| 1003 | 0,869 | 1103 | 0,868 | 1203 | 0,870 | 1303 | 0,872 | 1403 | 0,871 |
| 1004 | 0,867 | 1104 | 0,867 | 1204 | 0,870 | 1304 | 0,872 | 1404 | 0,872 |
| 1005 | 0,867 | 1105 | 0,867 | 1205 | 0,870 | 1305 | 0,872 | 1405 | 0,872 |
| 1006 | 0,868 | 1106 | 0,868 | 1206 | 0,869 | 1306 | 0,872 | 1406 | 0,871 |
| 1007 | 0,868 | 1107 | 0,868 | 1207 | 0,870 | 1307 | 0,872 | 1407 | 0,872 |
| 1008 | 0,868 | 1108 | 0,868 | 1208 | 0,870 | 1308 | 0,872 | 1408 | 0,871 |
| 1009 | 0,869 | 1109 | 0,869 | 1209 | 0,870 | 1309 | 0,871 | 1409 | 0,872 |
| 1010 | 0,868 | 1110 | 0,868 | 1210 | 0,870 | 1310 | 0,872 | 1410 | 0,871 |
| 1011 | 0,869 | 1111 | 0,868 | 1211 | 0,870 | 1311 | 0,872 | 1411 | 0,872 |
| 1012 | 0,869 | 1112 | 0,869 | 1212 | 0,870 | 1312 | 0,872 | 1412 | 0,872 |
| 1013 | 0,869 | 1113 | 0,868 | 1213 | 0,870 | 1313 | 0,871 | 1413 | 0,872 |
| 1014 | 0,870 | 1114 | 0,869 | 1214 | 0,869 | 1314 | 0,871 | 1414 | 0,872 |
| 1015 | 0,871 | 1115 | 0,869 | 1215 | 0,869 | 1315 | 0,871 | 1415 | 0,872 |
| 1016 | 0,868 | 1116 | 0,869 | 1216 | 0,870 | 1316 | 0,871 | 1416 | 0,873 |

| Densité de l'empilement en fonction du nombre d'élément | | | | | | | | | |
|---|---|---|---|---|---|---|---|---|---|
| Nombre d'éléments | K | Nombre d'éléments | K | Nombre d'éléments | K | Nombre d'éléments | K | Nombre d'éléments | K |
| 1017 | 0,869 | 1117 | 0,870 | 1217 | 0,870 | 1317 | 0,871 | 1417 | 0,873 |
| 1018 | 0,869 | 1118 | 0,869 | 1218 | 0,870 | 1318 | 0,872 | 1418 | 0,873 |
| 1019 | 0,869 | 1119 | 0,869 | 1219 | 0,870 | 1319 | 0,872 | 1419 | 0,873 |
| 1020 | 0,870 | 1120 | 0,870 | 1220 | 0,870 | 1320 | 0,872 | 1420 | 0,873 |
| 1021 | 0,870 | 1121 | 0,870 | 1221 | 0,870 | 1321 | 0,871 | 1421 | 0,873 |
| 1022 | 0,870 | 1122 | 0,870 | 1222 | 0,870 | 1322 | 0,871 | 1422 | 0,873 |
| 1023 | 0,870 | 1123 | 0,869 | 1223 | 0,870 | 1323 | 0,872 | 1423 | 0,873 |
| 1024 | 0,870 | 1124 | 0,869 | 1224 | 0,869 | 1324 | 0,871 | 1424 | 0,872 |
| 1025 | 0,870 | 1125 | 0,869 | 1225 | 0,869 | 1325 | 0,871 | 1425 | 0,873 |
| 1026 | 0,871 | 1126 | 0,870 | 1226 | 0,870 | 1326 | 0,871 | 1426 | 0,873 |
| 1027 | 0,871 | 1127 | 0,870 | 1227 | 0,870 | 1327 | 0,871 | 1427 | 0,873 |
| 1028 | 0,868 | 1128 | 0,870 | 1228 | 0,870 | 1328 | 0,871 | 1428 | 0,873 |
| 1029 | 0,868 | 1129 | 0,871 | 1229 | 0,870 | 1329 | 0,871 | 1429 | 0,873 |
| 1030 | 0,868 | 1130 | 0,870 | 1230 | 0,870 | 1330 | 0,871 | 1430 | 0,873 |
| 1031 | 0,868 | 1131 | 0,870 | 1231 | 0,871 | 1331 | 0,871 | 1431 | 0,873 |
| 1032 | 0,868 | 1132 | 0,871 | 1232 | 0,871 | 1332 | 0,871 | 1432 | 0,873 |
| 1033 | 0,868 | 1133 | 0,871 | 1233 | 0,871 | 1333 | 0,871 | 1433 | 0,873 |
| 1034 | 0,868 | 1134 | 0,870 | 1234 | 0,871 | 1334 | 0,870 | 1434 | 0,873 |
| 1035 | 0,868 | 1135 | 0,871 | 1235 | 0,871 | 1335 | 0,871 | 1435 | 0,873 |
| 1036 | 0,869 | 1136 | 0,870 | 1236 | 0,871 | 1336 | 0,871 | 1436 | 0,873 |
| 1037 | 0,869 | 1137 | 0,871 | 1237 | 0,871 | 1337 | 0,871 | 1437 | 0,873 |
| 1038 | 0,870 | 1138 | 0,870 | 1238 | 0,871 | 1338 | 0,871 | 1438 | 0,873 |
| 1039 | 0,870 | 1139 | 0,870 | 1239 | 0,871 | 1339 | 0,871 | 1439 | 0,873 |
| 1040 | 0,869 | 1140 | 0,870 | 1240 | 0,871 | 1340 | 0,871 | 1440 | 0,872 |

| Densité de l'empilement en fonction du nombre d'élément | | | | | | | | | |
|---|---|---|---|---|---|---|---|---|---|
| Nombre d'éléments | K | Nombre d'éléments | K | Nombre d'éléments | K | Nombre d'éléments | K | Nombre d'éléments | K |
| 1041 | 0,869 | 1141 | 0,870 | 1241 | 0,871 | 1341 | 0,871 | 1441 | 0,873 |
| 1042 | 0,869 | 1142 | 0,870 | 1242 | 0,871 | 1342 | 0,871 | 1442 | 0,873 |
| 1043 | 0,869 | 1143 | 0,869 | 1243 | 0,871 | 1343 | 0,871 | 1443 | 0,873 |
| 1044 | 0,870 | 1144 | 0,869 | 1244 | 0,871 | 1344 | 0,871 | 1444 | 0,873 |
| 1045 | 0,871 | 1145 | 0,869 | 1245 | 0,870 | 1345 | 0,871 | 1445 | 0,873 |
| 1046 | 0,866 | 1146 | 0,869 | 1246 | 0,870 | 1346 | 0,870 | 1446 | 0,873 |
| 1047 | 0,866 | 1147 | 0,869 | 1247 | 0,870 | 1347 | 0,871 | 1447 | 0,872 |
| 1048 | 0,867 | 1148 | 0,868 | 1248 | 0,869 | 1348 | 0,871 | 1448 | 0,872 |
| 1049 | 0,866 | 1149 | 0,868 | 1249 | 0,869 | 1349 | 0,871 | 1449 | 0,872 |
| 1050 | 0,866 | 1150 | 0,868 | 1250 | 0,868 | 1350 | 0,871 | 1450 | 0,872 |
| Densité de l'empilement en fonction du nombre d'élément | | | | | | | | | |
| 1051 | 0,867 | 1151 | 0,868 | 1251 | 0,868 | 1351 | 0,870 | 1451 | 0,872 |
| 1052 | 0,867 | 1152 | 0,868 | 1252 | 0,869 | 1352 | 0,870 | 1452 | 0,873 |
| 1053 | 0,868 | 1153 | 0,869 | 1253 | 0,869 | 1353 | 0,870 | 1453 | 0,873 |
| 1054 | 0,867 | 1154 | 0,869 | 1254 | 0,869 | 1354 | 0,870 | 1454 | 0,872 |
| 1055 | 0,868 | 1155 | 0,868 | 1255 | 0,869 | 1355 | 0,871 | 1455 | 0,872 |
| 1056 | 0,868 | 1156 | 0,868 | 1256 | 0,869 | 1356 | 0,871 | 1456 | 0,872 |
| 1057 | 0,868 | 1157 | 0,868 | 1257 | 0,869 | 1357 | 0,871 | 1457 | 0,872 |
| 1058 | 0,867 | 1158 | 0,868 | 1258 | 0,869 | 1358 | 0,871 | 1458 | 0,871 |
| 1059 | 0,868 | 1159 | 0,869 | 1259 | 0,869 | 1359 | 0,871 | 1459 | 0,872 |
| 1060 | 0,868 | 1160 | 0,868 | 1260 | 0,869 | 1360 | 0,871 | 1460 | 0,872 |
| 1061 | 0,868 | 1161 | 0,869 | 1261 | 0,870 | 1361 | 0,870 | 1461 | 0,872 |
| 1062 | 0,868 | 1162 | 0,869 | 1262 | 0,869 | 1362 | 0,870 | 1462 | 0,872 |
| 1063 | 0,868 | 1163 | 0,869 | 1263 | 0,870 | 1363 | 0,870 | 1463 | 0,872 |

EP 2 929 386 B1

| Densité de l'empilement en fonction du nombre d'élément | | | | | | | | | |
|---|---|---|---|---|---|---|---|---|---|
| Nombre d'éléments | K | Nombre d'éléments | K | Nombre d'éléments | K | Nombre d'éléments | K | Nombre d'éléments | K |
| 1064 | 0,868 | 1164 | 0,869 | 1264 | 0,869 | 1364 | 0,870 | 1464 | 0,873 |
| 1065 | 0,868 | 1165 | 0,870 | 1265 | 0,869 | 1365 | 0,870 | 1465 | 0,873 |
| 1066 | 0,868 | 1166 | 0,869 | 1266 | 0,870 | 1366 | 0,871 | 1466 | 0,873 |
| 1067 | 0,868 | 1167 | 0,869 | 1267 | 0,870 | 1367 | 0,871 | 1467 | 0,873 |
| 1068 | 0,868 | 1168 | 0,869 | 1268 | 0,869 | 1368 | 0,871 | 1468 | 0,874 |
| 1069 | 0,869 | 1169 | 0,870 | 1269 | 0,869 | 1369 | 0,871 | 1469 | 0,874 |
| 1070 | 0,868 | 1170 | 0,870 | 1270 | 0,870 | 1370 | 0,871 | 1470 | 0,874 |
| 1071 | 0,868 | 1171 | 0,870 | 1271 | 0,870 | 1371 | 0,871 | 1471 | 0,874 |
| 1072 | 0,868 | 1172 | 0,870 | 1272 | 0,870 | 1372 | 0,871 | 1472 | 0,874 |
| 1073 | 0,868 | 1173 | 0,869 | 1273 | 0,870 | 1373 | 0,871 | 1473 | 0,874 |
| 1074 | 0,868 | 1174 | 0,869 | 1274 | 0,870 | 1374 | 0,871 | 1474 | 0,874 |
| 1075 | 0,869 | 1175 | 0,870 | 1275 | 0,870 | 1375 | 0,871 | 1475 | 0,874 |
| 1076 | 0,869 | 1176 | 0,870 | 1276 | 0,871 | 1376 | 0,871 | 1476 | 0,875 |
| 1077 | 0,869 | 1177 | 0,870 | 1277 | 0,871 | 1377 | 0,872 | 1477 | 0,875 |
| 1078 | 0,869 | 1178 | 0,870 | 1278 | 0,871 | 1378 | 0,872 | 1478 | 0,874 |
| 1079 | 0,869 | 1179 | 0,870 | 1279 | 0,871 | 1379 | 0,872 | 1479 | 0,875 |
| 1080 | 0,870 | 1180 | 0,871 | 1280 | 0,871 | 1380 | 0,871 | 1480 | 0,874 |
| 1081 | 0,870 | 1181 | 0,870 | 1281 | 0,871 | 1381 | 0,872 | 1481 | 0,875 |
| 1082 | 0,870 | 1182 | 0,869 | 1282 | 0,871 | 1382 | 0,872 | 1482 | 0,875 |
| 1083 | 0,869 | 1183 | 0,869 | 1283 | 0,871 | 1383 | 0,872 | 1483 | 0,875 |
| 1084 | 0,869 | 1184 | 0,869 | 1284 | 0,870 | 1384 | 0,871 | 1484 | 0,875 |
| 1085 | 0,869 | 1185 | 0,870 | 1285 | 0,870 | 1385 | 0,871 | 1485 | 0,875 |
| 1086 | 0,868 | 1186 | 0,869 | 1286 | 0,871 | 1386 | 0,871 | 1486 | 0,874 |
| 1087 | 0,869 | 1187 | 0,869 | 1287 | 0,871 | 1387 | 0,871 | 1487 | 0,875 |

(suite)

| Densité de l'empilement en fonction du nombre d'élément | | | | | | | | | |
|---|---|---|---|---|---|---|---|---|---|
| Nombre d'éléments | K | Nombre d'éléments | K | Nombre d'éléments | K | Nombre d'éléments | K | Nombre d'éléments | K |
| 1088 | 0,869 | 1188 | 0,868 | 1288 | 0,871 | 1388 | 0,871 | 1488 | 0,875 |
| 1089 | 0,869 | 1189 | 0,869 | 1289 | 0,870 | 1389 | 0,871 | 1489 | 0,875 |
| 1090 | 0,870 | 1190 | 0,869 | 1290 | 0,870 | 1390 | 0,871 | 1490 | 0,875 |
| 1091 | 0,870 | 1191 | 0,869 | 1291 | 0,870 | 1391 | 0,871 | 1491 | 0,875 |
| 1092 | 0,870 | 1192 | 0,869 | 1292 | 0,870 | 1392 | 0,871 | 1492 | 0,875 |
| 1093 | 0,869 | 1193 | 0,869 | 1293 | 0,870 | 1393 | 0,871 | 1493 | 0,875 |
| 1094 | 0,869 | 1194 | 0,870 | 1294 | 0,871 | 1394 | 0,871 | 1494 | 0,875 |
| 1095 | 0,868 | 1195 | 0,870 | 1295 | 0,870 | 1395 | 0,871 | 1495 | 0,875 |
| 1096 | 0,868 | 1196 | 0,870 | 1296 | 0,871 | 1396 | 0,871 | 1496 | 0,875 |
| 1097 | 0,869 | 1197 | 0,870 | 1297 | 0,871 | 1397 | 0,871 | 1497 | 0,874 |
| 1098 | 0,869 | 1198 | 0,870 | 1298 | 0,870 | 1398 | 0,871 | 1498 | 0,874 |
| 1099 | 0,868 | 1199 | 0,871 | 1299 | 0,871 | 1399 | 0,872 | 1499 | 0,875 |
| 1100 | 0,867 | 1200 | 0,871 | 1300 | 0,871 | 1400 | 0,872 | 1500 | 0,874 |
| Au-delà de 1500 éléments, le coefficient K vaut 0,875. | | | | | | | | | |

**Revendications**

1. Câble optique (1) comprenant :

   - une gaine (2) comprenant une paroi (4) délimitant une cavité interne (5), et
   - une pluralité d'éléments longitudinaux (3) s'étendant en parallèle dans la cavité,

   dans lequel les éléments longitudinaux (3) présentent un taux d'encombrement de la cavité interne (5) compris entre 0,5 et 0,9, le taux d'encombrement étant défini comme le rapport entre la somme des sections transverses des éléments longitudinaux sur la section de la cavité interne, divisé par un coefficient K, le coefficient K étant défini dans le tableau 1 en fonction du nombre d'éléments longitudinaux, et
   dans lequel chaque élément longitudinal (3) est disposé dans la cavité interne (5) en présentant un excédent de longueur par rapport à la gaine (2), constaté à 20°C sans contrainte d'allongement sur le câble optique (1), **caractérisé en ce que** la dispersion des excédents de longueur est inférieure ou égale à 0,1%, la dispersion des excédents de longueurs étant définie comme la différence entre le plus grand excédent de longueur et le plus petit excédent de longueur.

2. Câble optique selon la revendication 1, dans lequel le taux d'encombrement de la cavité interne est compris entre 0,7 et 0,9.

3. Câble optique selon l'une des revendications 1 ou 2, dans lequel chaque élément longitudinal (3) présente un excédent de longueur compris entre 0% et 0,5 % de la longueur de la gaine (2).

4. Câble optique selon l'une des revendications 1 à 3, dans lequel les éléments longitudinaux (3) incluent des modules optiques (8), chaque module optique (8) comprenant une enveloppe (9) en matière plastique et une ou plusieurs fibres optiques (10) contenues dans l'enveloppe (9).

5. Câble optique selon la revendication 4, dans lequel les éléments longitudinaux (3) incluent au moins 6 modules optiques (8).

6. Câble optique selon l'une des revendications 1 à 5, dans lequel la paroi (4) de la gaine (2) est tubulaire et entoure la cavité interne (5), et la gaine (2) comprend deux éléments porteurs (6) noyés dans la paroi (4) et agencés en des positions diamétralement opposées.

7. Câble optique selon la revendication 6, dans lequel les éléments porteurs (6) sont en polymère renforcé avec des fibres ou en métal.

8. Câble optique selon l'une des revendications 1 à 5, dans lequel les éléments longitudinaux (3) incluent un filin hydrogonflant, un élément de renfort, une fibre optique nue, un conducteur métallique ou une combinaison de ces éléments.

9. Câble optique selon l'une des revendications 1 à 8, dans lequel la paroi (4) de la gaine (2) est formée en un matériau non propagateur de la flamme à faible taux de dégagement de fumée et à quasi-absence de gaz halogénés (LSOH), tel qu'un matériau contenant du polypropylène ou du polyéthylène, en polyéthylène, en polychlorure de vinyle ou une combinaison de ces matériaux.

10. Câble optique selon l'une des revendications 1 à 9, dans lequel la gaine (2) comprend en outre une enveloppe de protection (7) s'étendant entre la paroi (4) et les éléments longitudinaux (3).

11. Procédé de fabrication d'un câble optique selon l'une des revendications 1 à 10, comprenant des étapes de :

   - former la paroi (4) de la gaine (2) par extrusion d'une matière plastique chauffée autour des éléments longitudinaux (3),
   - lors de l'extrusion, noyer des éléments porteurs (6) dans la paroi (4) de la gaine (2), tout en exerçant une tension sur les éléments porteurs (6) pour allonger les éléments porteurs (6), puis
   - une fois la paroi (4) refroidie, relâcher la tension exercée sur les éléments porteurs (6) de sorte que les éléments porteurs se rétractent, entrainant une rétraction de la gaine (2) pour créer un excédent de longueur des éléments longitudinaux (3) par rapport à la gaine (2),

dans lequel les éléments longitudinaux (3) sont alimentés à l'aide d'une chenille donneuse (18) ou d'un cabestan donneur ayant une vitesse d'alimentation synchronisée avec une vitesse de défilement de la gaine (2) de sorte que la dispersion des excédents de longueur est inférieure ou égale à 0,1%, la dispersion des excédents de longueurs étant définie comme la différence entre le plus grand excédent de longueur et le plus petit excédent de longueur.

**12.** Procédé selon la revendication 11, dans lequel le relâchement de la tension crée un excédent de longueur des éléments longitudinaux (3) compris entre 0% et 0,5%.

## Patentansprüche

**1.** Glasfaserkabel (1), umfassend:

- einen Kabelkanal (2), umfassend eine Wand (4), die eine interne Ausnehmung (5) begrenzt, und
- eine Vielzahl von länglichen Elementen (3), die sich parallel in der Ausnehmung erstrecken

in dem die länglichen Elemente (3) einen Platzverbrauchsgrad der internen Ausnehmung (5) aufweisen, der zwischen 0,5 und 0,9 inbegriffen ist, wobei der Platzverbrauchssatz als das Verhältnis zwischen der Summe der Querabschnitte der länglichen Elemente auf dem Abschnitt der internen Ausnehmung, dividiert durch einen Koeffizienten K definiert ist, wobei der Koeffizient K in der Tabelle 1 in Abhängigkeit von der Anzahl der länglichen Elemente definiert ist und; in dem jedes längliche Element (3) in der internen Ausnehmung (5) angeordnet ist, indem es einen Längenüberschuss im Verhältnis zum Kabelkanal (2) aufweist, der bei 20° C ohne Ausdehnungsspannung auf dem Glasfaserkabel (1) festgestellt wird,
**dadurch gekennzeichnet, dass** die Verteilung der Längenüberschüsse kleiner als oder gleich 0,1 % ist, wobei die Verteilung der Längenüberschüsse als die Differenz zwischen dem größten Längenüberschuss und dem kleinsten Längenüberschuss definiert ist.

**2.** Glasfaserkabel gemäß Anspruch 1, bei dem der Platzverbrauchssatz der internen Ausnehmung zwischen 0,7 und 0,9 inbegriffen ist.

**3.** Glasfaserkabel gemäß einem der Ansprüche 1 oder 2, in dem jedes längliche Element (3) einen Längenüberschuss aufweist, der zwischen 0% und 0,5 % der Länge des Kabelkanals (2) inbegriffen ist.

**4.** Glasfaserkabel gemäß einem der Ansprüche 1 bis 3, in dem die länglichen Elemente (3) Glasfasermodule (8) einschließen, wobei jedes Glasfasermodul (8) eine Umhüllung (9) aus Plastikmaterial und eine oder mehrere Glasfaser (n) (10) umfasst, das / die in der Hülle (9) ist (sind).

**5.** Glasfaserkabel gemäß Anspruch 4, bei dem die länglichen Elemente (3) wenigstens 6 Glasfasermodule (8) einschließen.

**6.** Glasfaserkabel gemäß einem der Ansprüche 1 bis 5, in dem die Wand (4) des Kabelkanals (2) röhrenförmig ist und die interne Ausnehmung (5) umschließt und der Kabelkanal (2) zwei Trägerelemente (6) umfasst, die in der Wand (4) versenkt und in diametral entgegengesetzten Positionen angeordnet sind.

**7.** Glasfaserkabel gemäß Anspruch 6, in dem die Trägerelemente (6) aus mit Fasern oder Metall verstärktem Polymer sind.

**8.** Glasfaserkabel gemäß einem der Ansprüche 1 bis 5, in dem die länglichen Elemente (3) eine aufquellende Leine, ein Verstärkungselement, eine nicht isolierte Glasfaser, einen Metallleiter oder eine Kombination dieser Elemente einschließen.

**9.** Glasfaserkabel gemäß einem der Ansprüche 1 bis 8, in dem die Wand (4) des Kabelkanals (2) aus einem nicht flammenverbreitenden Material mit niedrigem Rauchfreisetzungssatz und praktisch ohne halogenierte Gase (LSOH), wie z. B. einem Material, das Polypropylen oder Polyethylen enthält, aus Polyethylen, Vinylpolychlorid oder einer Kombination dieser Materialien gebildet ist.

**10.** Glasfaserkabel gemäß einem der Ansprüche 1 bis 9, in dem der Kabelkanal (2) darüber hinaus eine Schutzhülle (7) umfasst, die sich zwischen der Wand (4) und den länglichen Elementen (3) erstreckt.

11. Herstellungsverfahren eines Glasfaserkabels gemäß einem der Ansprüche 1 bis 10, umfassend die Stufen:

- Bilden der Wand (4) des Kabelkanals (2) per Strangziehen eines Plastikmaterials, das um längliche Elemente (3) erhitzt ist,
- beim Strangpressen Versenken der Trägerelemente (6) in der Wand (4) des Kabelkanals (2) bei gleichzeitigem Ausüben einer Spannung auf die Trägerelemente (6) zwecks Verlängerung der Trägerelemente (6), dann
- nach dem Abkühlen der Wand (4) Lockern der auf den Trägerelementen (6) ausgeübten Spannung derart, dass die Trägerelemente sich zurückziehen und dabei ein Zurückziehen des Kabelkanals (2) nach sich ziehen, um einen Längenüberschuss der länglichen Elemente (3) im Verhältnis zum Kabelkanal (2) zu schaffen,

in dem die länglichen Elemente (3) mithilfe einer Spenderlaufkette (18) oder einer Spenderwinde versorgt werden, die eine mit einer Abspulgeschwindigkeit des Kabelkanals (2) synchronisierte Versorgungsgeschwindigkeit derart hat, dass die Verteilung der Längenüberschüsse geringer als oder gleich 0,1 % ist, wobei die Verteilung der Längenüberschüsse als die Differenz zwischen dem größten Längenüberschuss und dem kleinsten Längenüberschuss definiert ist.

12. Verfahren gemäß Anspruch 11, in dem das Lockern der Spannung einen Längenüberschuss der länglichen Elemente (3) schafft, der zwischen 0 % und 0,5 % inbegriffen ist.

**Claims**

1. Optical cable (1) comprising:

- a sheath (2) comprising a wall (4) delimiting an internal cavity (5), and
- a plurality of longitudinal elements (3) extending in parallel in the cavity,

wherein the longitudinal elements (3) have a space requirement level in the internal cavity (5) between 0.5 and 0.9, the space occupancy rate being defined as the ratio between the sum of the transverse sections of the longitudinal elements over the section of the internal cavity, divided by a coefficient K, the coefficient K being defined in table 1 according to the number of longitudinal elements, and
wherein each longitudinal element (3) is arranged in the internal cavity (5), having an excess length with respect to the sheath (2), observed at 20°C without elongation stress on the optical cable (1),
**characterised in that** the dispersion of the excess lengths is less than or equal to 0.1%, the dispersion of the excess lengths being defined as the difference between the highest excess length and the lowest excess length.

2. Optical cable according to claim 1, wherein the space occupancy rate of the internal cavity is between 0.7 and 0.9.

3. Optical cable according to one of claims 1 or 2, wherein each longitudinal element (3) has an excess length between 0% and 0.5% of the length of the sheath (2).

4. Optical cable according to one of claims 1 to 3, wherein the longitudinal elements (3) include optical modules (8), with each optical module (8) comprising a casing (9) made of plastic material and one or several optical fibres (10) contained in the casing (9).

5. Optical cable according to claim 4, wherein the longitudinal elements (3) include at least 6 optical modules (8).

6. Optical cable according to one of claims 1 to 5, wherein the wall (4) of the sheath (2) is tubular and surrounds the internal cavity (5), and the sheath (2) comprises two bearing elements (6) embedded in the wall (4) and arranged in diametrically opposite positions.

7. Optical cable according to claim 6, wherein the bearing elements (6) are made of polymer reinforced with fibres or of metal.

8. Optical cable according to one of claims 1 to 5, wherein the longitudinal elements (3) include a water-swellable line, a reinforcing element, a bare optical fibre, a metal conductor or a combination of these elements.

9. Optical cable according to one of claims 1 to 8, wherein the wall (4) of the sheath (2) is formed from a flame-retardant material with a low smoke release and with a quasi-absence of halogenated gases (LSOH), such as a material containing polypropylene or polyethylene, made of polyethylene, made of polyvinyl chloride or a combination of these materials.

10. Optical cable according to one of claims 1 to 9, wherein the sheath (2) further comprises a protective casing (7) extending between the wall (4) and the longitudinal elements (3).

11. Method for manufacturing an optical cable according to one of claims 1 to 10, comprising the steps of:

- forming the wall (4) of the sheath (2) by extruding a heated plastic material around the longitudinal elements (3),
- during the extrusion, embedding bearing elements (6) in the wall (4) of the sheath (2), while still exerting a tension on the bearing elements (6) in order to lengthen the bearing elements (6), then
- once the wall (4) is cooled, releasing the tension exerted on the bearing elements (6) in such a way that the bearing elements retract, causing a retraction of the sheath (2) in order to create an excess length of the longitudinal elements (3) in relation to the sheath (2),

wherein the longitudinal elements (3) are supplied using a debiting roller track (18) or a debiting capstan having a supply speed synchronised with a scrolling speed of the sheath (2) in such a way that the dispersion of the excess lengths is less than or equal to 0.1%, the dispersion of the excess lengths being defined as the difference between the highest excess length and the lowest excess length.

12. Method according to claim 11, wherein the releasing of the tension creates an excess length of the longitudinal elements (3) between 0% and 0.5%.

**FIG. 1**

**FIG. 2**

**FIG. 3**

## FIG. 4

## FIG. 5

FIG. 6

**EP 2 929 386 B1**

## RÉFÉRENCES CITÉES DANS LA DESCRIPTION

**Documents brevets cités dans la description**

- FR 2810747
- EP 1921478 A

- FR 2908524